# EUROPEAN PATENT APPLICATION

(11) **EP 1 997 385 A1**
(43) Date of publication of application: **03.12.2008**
(21) Application number: 07010618.2
(22) Date of filing: 29.05.2007
(51) Int. Cl.: A23G 1/00, A23G 3/00, A23G 1/54

(54) **A method of producing a confectionery product and a confectionery product**

(71) Applicant: Kraft Foods R & D, Inc., Northfield, IL 60093 (US)
(72) Inventor: Simbuerger, Dieter Stephan, 81375 Munich (DE); Hecht, Gerhard, 87600 Kaufbeuren (DE); Paggios, Konstantinos, 81541 Munich (DE); Balzer, Hartmut Heinrich, Dr., 85238 Petershausen (DE); Williams, Maria Florencia, 80335 Munich (DE); Thiele, Martin, 83607 Holzkirchen (DE)
(74) Representative: HOFFMANN EITLE

(57) **Abstract**

The invention is related to a method of producing a confectionery product in which a core is enrobed by a confectionery mass, wherein moisture is subsequently caused to migrate into the enrobing confectionery mass from the outside, and the product is caused to cure thereafter.

The invention is further related to a confectionery product in which a core is enrobed by a confectionery mass, wherein the confectionery mass has a moisture content of at least 1,5%, at least in out portions thereof and has a cured constitution.

## Description

### Technical field

The invention relates to a method of producing a confectionery product, particularly a method in which a core is enrobed by chocolate.

### Background art

Numerous confectionery products, in which a core, such as one or more wafers, is enrobed by a confectionery mass, such as chocolate, are known an available on the market. When handling such products a typical situation arises that the consumer transfers, with his fingers, heat to the confectionery mass enrobing the core. This causes the confectionery mass to melt, at least partially, which is undesired.

It is known to increase the heat stability of the enrobing confectionery mass by fat systems with a higher melting point. This, however, leads to a waxy feeling in the mouth, when the product is consumed.

In this context, US 5 108 769, for example, describes a structured emulsion in a confectionery coating that is a polyol-in-fat emulsion. The coating is said to have an elevated melting temperature.

US 5,160,760 is related to a heat resistant chocolate formed by mixing a water-in-oil emulsion and a chocolate based material. As described in these documents, increased moisture content in the chocolate leads to a higher melting temperature of the cured chocolate.

### Summary of the invention

The invention provides a method for producing confectionery products and a confectionery product, in which the heat stability of the enrobing confectionery mass can be increased without deteriorating the product's properties, which arise when consumed.

The above-stated object is, firstly, solved by the method described in claim 1.

Accordingly, a core, such as one or more wafers, crisps, biscuits, caramel or milk cream, is enrobed by a confectionery mass, such as chocolate. In the method described herein, moisture is caused to migrate into the enrobing confectionery mass. Subsequently, the confectionery mass is caused to cure. The curing forms an inherent "skeleton" in the enrobing confectionery mass which increases the heat stability. In particular, the melting point of the enrobing confectionery mass, such as chocolate, can be increased to be above about 50°C. With this level of the melting point, the enrobing confectionery mass will not melt, even if the product is handled by a consumer's hand. In particular, the invention substantially prevents the enrobing confectionery mass from melting when it is handled by the consumer's hand and, at the same time, avoids a waxy mouth feel when the product is consumed. This is because the invention is not based on the use of fat systems, but is based on the use of a cured composition of the enrobing confectionery mass.

As regards the increased moisture content of the enrobing confectionery mass, it is noted that it will be sufficient if the outer areas of the enrobing confectionery mass comprise the increased moisture content to allow the formation of a type of skeleton by the curing treatment thereafter. In the method described herein, the moisture is caused to migrate into the enrobing confectionery mass when this mass is already applied to a core. As a general alternative, enrobing masses having an increased moisture level or spraying of moisture increased masses may be used. However, a process in which moisture is caused to migrate into the confectionery mass enrobing a core can be realized more easily from a technical point of view. This is because the increase of the moisture content, by adding an emulsion to the chocolate, leads to increased viscosity. This, however, makes the chocolate unsuitable for enrobing a core. Thus, the invention is based on the idea of enrobing the core first and increasing the moisture content of the enrobing mass in a second step. Moreover, experiments have shown that an increase of the moisture content, by causing moisture to migrate into the enrobing confectionary mass, can be obtained also for chocolate enrobing a core, and not only for "solid" confectionary products such as chocolate bars or tablets. It is also noted that the effect of increasing the melting temperature, by increasing the moisture content and curing the chocolate thereafter, is mainly a physical effect, rather than a chemical one. Finally, whereas the presence of this effect is well established, details thereof could only be found out by extensive studies.

Preferred embodiments of the method described herein are described in the dependent claims.

As regards a process, in which moisture is caused to migrate into the enrobing confectionery mass, it may be advantageous to subject the confectionery product, in which a confectionery mass enrobes a core, to an atmosphere having an elevated relative humidity, such as 70% to 95% relative humidity. In particular, the method described herein may involve the step of controlling an atmosphere so that it has the mentioned relative humidity.

Tests have shown that exposure of the confectionery product to such a relative humidity for about one hour causes the desired increase of the moisture content, at least in the outer areas of the confectionery mass, which allows to increase the heat stability by causing the confectionery mass to cure thereafter.

Experiments have also shown that the desired properties of the final product may be achieved if the confectionery mass is caused to acquire a moisture content of at least 1,5%, preferably 1,8% to 4% and most preferred about 30, at least in outer portions thereof.

As regards the treatment to cause curing of the enrobing confectionery mass, a heat treatment has proven effective.

It is currently preferred to carry out such a heat treatment at a temperature of at least 30°C. Alternatively, higher temperatures may be used which will reduce the time required for the curing treatment. For example, a heat treatment at about 30°C may be carried out for, for example, 3 to 4 weeks, whereas a heat treatment at about 50°C may be carried out for about 2 hours.

Thus, it is currently preferred to carry out the heat treatment for at least two hours.

As a further alternative, the curing treatment may be carried out by a microwave treatment and may be completed within a few seconds. Generally, the lower the temperature of the heat treatment, the longer the time required for the heat treatment will be, and vice versa.

The invention also provides a confectionery.product in which a core is enrobed by a confectionery mass, and in which the enrobing confectionery mass has moisture content of at least 1,5% and a cured constitution. The object underlying the invention may also be solved by a confectionery product as described above in which the enrobing confectionery mass has a melting temperature of above about 50°C. As described, the cured constitution may, for example, be achieved by causing moisture to migrate into the enrobing confectionery mass, and causing the confectionery mass to cure thereafter. As regards details of the preferred embodiments of the confectionery product described herein, reference is made to the above specification regarding the method of producing same.

### Brief description of the drawings

Hereinafter, an example and experimental results are explained with reference to the drawings, in which:

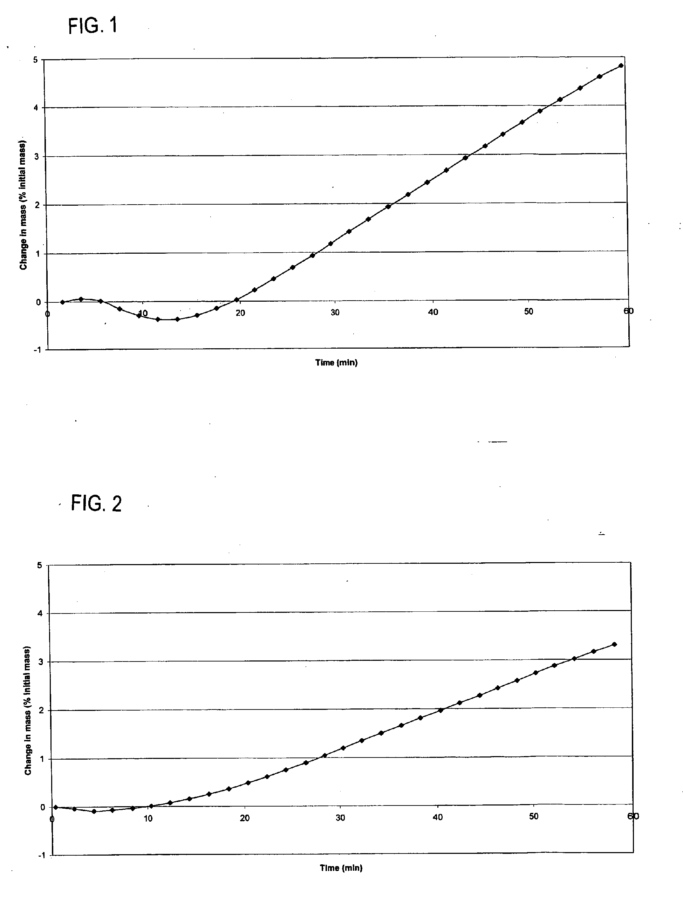

Fig. 1 shows a chart indicating the change in mass over time of a first sample; and
Fig. 2 shows a chart indicating the change in mass over time of a second sample.

### Example

Two samples of a known product of the Applicant were analyzed with a differential vapour sorption balance (DVS) in order to find out about the migration of moisture into the enrobing chocolate. For this purpose, some chocolate, which enrobes a core, was removed from the mentioned product and two samples thereof were exposed to an atmosphere of 95% relative humidity. The mass of the product was measured by the DVS in order to find out how much moisture the enrobing chocolate takes up. As can be seen from the figures, there is a slight loss of mass in the first 10 to 20 minutes of both samples. However, considering a time frame of approximately 60 minutes, the mass of the chocolate increases to about 103% to 105% of the initial mass. Thus, it can be shown that approximately 3% to 5% of moisture is taken up by the chocolate.

As detailed above, it is safe to say that the melting temperature of the enrobing chocolate is increased with the increased moisture content when the chocolate is cured. The melting temperature could, for example, be measured by NIR spectroscopy, confocal laser scanning microscopy, Raman spectroscopy or similar methods.

## Claims

1. A method of producing a confectionery product in which a core is enrobed by a confectionery mass, wherein moisture is subsequently caused to migrate into the enrobing confectionery mass from the outside, and the product is caused to cure thereafter.

2. The method in accordance with claim 1, wherein the product is subjected to an atmosphere having a relative humidity of at least 70%.

3. The method in accordance with claim 1 or 2, wherein moisture is caused to migrate into the enrobing confectionery mass for about 1 hour.

4. The method in accordance with one of the preceding claims, wherein the enrobing confectionery mass is caused to acquire a moisture content of at least 1,5%, preferably 1,8% to 4% and most preferred about 3%, at least in outer portions thereof.

5. The method in accordance with one of the preceding claims, wherein the product is subjected to a heat treatment to cause curing thereof.

6. The method in accordance with claim 5, wherein the heat treatment is carried out at a temperature of at least 30°C.

7. The method in accordance with claim 5 or 6, wherein the heat treatment is carried out for at least 2 hours.

8. The method in accordance with claim 5, wherein the heat treatment is carried out by a microwave treatment, preferably for a few seconds.

9. A confectionery product in which a core is enrobed by a confectionery mass, wherein the confectionery mass has a moisture content of at least 1,5%, at least in outer portions thereof and has a cured constitution.
